# EUROPÄISCHE PATENTANMELDUNG

(11) **EP 1 864 742 A1**
(43) Veröffentlichungstag der Anmeldung: **12.12.2007**
(21) Anmeldenummer: 06011854.4
(22) Anmeldetag: 08.06.2006
(51) Int. Cl.: B23H 9/10, B23H 9/14, C23C 14/58, F01D 5/08, C23C 14/22, C23C 14/34

(54) **Verfahren zur funkenerosiven Bearbeitung eines elektrisch nichtleitenden Materials**

(71) Anmelder: SIEMENS AKTIENGESELLSCHAFT, 80333 München (DE); Albert-Ludwigs-Universität Freiburg, 79085 Freiburg (DE)
(72) Erfinder: Förster, Ralf Dr., 12623 Berlin (DE)

(57) **Zusammenfassung**

Die Erfindung betrifft ein Verfahren zur funkenerosiven Bearbeitung eines elektrisch nichtleitenden Materials (1), bei dem eine Assistenzelektrode (2) auf dem elektrisch nichtleitenden Material (1) durch einen Beschichtungsprozess aufgebracht wird, an die Assistenzelektrode (2) und eine gegenüberliegend angeordnete Arbeitselektrode (3) eine geeignete Spannung angelegt wird, wodurch es zu einem Abtragungsprozess in Form einer elektrischen Ladung durch Funkenschlag kommt, so dass ein Teil der Assistenzelektrode (2) und des elektrisch nichtleitenden Materials (1) verdampft und entfernt wird, wobei das Verfahren in einem gasförmigen Dielektrikum (5) durchgeführt wird, die Assistenzelektrode (2) durch Sputtern aufgebracht wird und der Beschichtungsprozess und der Abtragungsprozess alternierend wiederholt werden.

## Beschreibung

Die Erfindung betrifft ein Verfahren zur funkenerosiven Bearbeitung eines elektrisch nichtleitenden Materials, bei dem eine Assistenzelektrode auf dem elektrisch nichtleitenden Material durch einen Beschichtungsprozess aufgebracht wird und an die Assistenzelektrode und eine gegenüberliegend angeordnete Arbeitselektrode eine geeignete Spannung angelegt wird, wodurch es zu einem Abtragungsprozess in Form einer elektrischen Entladung durch Funkenschlag kommt, bei dem ein Teil der Assistenzelektrode und des elektrisch nichtleitenden Materials verdampft und entfernt wird.

Funkenerosive Bearbeitungsverfahren für elektrisch nichtleitende Materialien sind im Stand der Technik bekannt. Sie werden u.a. eingesetzt, um in Bauteilen, die mit einer keramischen Beschichtung versehen sind, Bohrungen zu erstellen. So werden etwa bei Turbinenschaufeln, die eine keramische Wärmedämmschicht auf einem metallischen Grundkörper aufweisen, Kühlluftbohrungen durch Funkenerosion erstellt.

In der DE 41 02 250 A1 ist allgemein ein Verfahren zur funkenerosiven Bearbeitung elektrisch nichtleitender Materialien beschrieben. Bei diesem Verfahren wird das nichtleitende Material vor seiner Beschichtung mit einer elektrisch leitenden Substanz beschichtet. Diese Schicht wird als Assistenzelektrode verwendet, die bei der funkenerosiven Bearbeitung eine elektrische Kontaktierung mit einer Arbeitselektrode herstellt. Das mit der Assistenzelektrode beschichtete, elektrisch nichtleitende Material und zumindest der zur Assistenzelektrode weisende Bereich der Arbeitselektrode, an dem es bei der Bearbeitung zur Funkenentladung kommt, sind in ein Dielektrikum getaucht, das durch eine Flüssigkeit wie Kerosin gebildet wird.

Wenn an die Anordnung eine Spannung angelegt wird, kommt es zwischen der Arbeitselektrode und der Assistenzelektrode zu einer Funkenentladung und in der Folge zu einem Abtrag der Assistenzelektrode sowie des darunter liegenden elektrisch nichtleitenden Materials. Gleichzeitig wird ein Teil des Dielektrikums gecrackt, wodurch Kohlenstoff oder leitfähige Carbide entstehen, die in Form einer elektrisch leitfähigen Schicht auf den freigelegten Oberflächenbereichen des nichtleitenden Materials abgeschieden werden. Die so abgeschiedene, elektrisch leitende Schicht ersetzt somit das abgetragene Material der Assistenzelektrode und stellt bei einem Vordringen der Arbeitselektrode in das nichtleitende Material eine elektrisch leitende Verbindung zu der Oberfläche des nichtleitenden Materials her, so dass eine kontinuierliche Bearbeitung möglich ist.

Als nachteilig wird angesehen, dass bei dem bekannten Verfahren die Bearbeitungsgeschwindigkeit begrenzt ist, da der Abscheidungsprozess der leitenden Schicht langsam erfolgt. Eine zügige Bearbeitung ist deshalb nicht möglich. Außerdem kann es aufgrund der im Micrometerbereich liegenden geringen Dicke der neu gebildeten Schicht leicht zu Unterbrechungen der elektrischen Leitung kommen, wenn diese beschädigt wird, was den Prozess vollständig zum Erliegen bringt.

Aufgabe der vorliegenden Erfindung ist es, ein Verfahren bereitzustellen, das eine schnelle und zuverlässige funkenerosive Bearbeitung eines elektrisch nichtleitenden Materials ermöglicht.

Diese Aufgabe wird erfindungsgemäß dadurch gelöst, dass das Verfahren in einem gasförmigen Dielektrikum durchgeführt wird, die Assistenzelektrode durch Sputtern aufgebracht wird und der Beschichtungsprozess und der Abtragungsprozess alterniert wiederholt werden.

Grundgedanke des erfindungsgemäßen Verfahrens ist es also, die funkenerosive Bearbeitung in einem gasförmigen Dielektrikum derart durchzuführen, dass alternierend zwei Prozessschritte, nämlich ein Beschichtungsprozess und ein Abtragungsprozess durchgeführt werden. In dem Beschichtungsprozess, der am Anfang des Verfahrens steht, wird durch Sputtern auf dem elektrisch nichtleitenden Material eine Schicht aus einem elektrisch leitenden Material als Assistenzelektrode aufgebracht. Während des Abtragungsprozesses wird eine funkenerosive Entladung zwischen der Assistenzelektrode und einer Arbeitselektrode herbeigeführt, wodurch zumindest Teile der Assistenzelektrode und des elektrisch nichtleitenden Materials verdampft und entfernt werden. Hiernach wird wiederum der Beschichtungsprozess derart wiederholt, dass auf dem im Abtragungsprozess freigelegten nichtleitenden Material erneut durch Sputtern eine Assistenzelektrode aufgebracht wird bzw. Reste der noch vorhandene Assistenzelektrode zu einer durchgehenden elektrisch leitenden Schicht ergänzt werden. Dann kann der Abtragungsprozess erneut in Gang gesetzt werden. Beide Verfahrensschritte werden solange wiederholt, wie die funkenerosive Bearbeitung fortgesetzt werden soll.

Vorteile des erfindungsgemäßen Verfahrens sind u.a., dass eine im Vergleich zu den im Stand der Technik bekannten Verfahren schnellere Bearbeitung möglich ist, da die Assistenzelektrode durch Sputtern aufgebracht wird und sie sich nicht langsam durch Ablagerung von Crackprodukten ausbilden muss. Außerdem kann der Beschichtungsprozess so gestaltet werden, dass eine Assistenzelektrode erhalten wird, die weitestgehend unempfindlich gegenüber Beschädigungen ist. Damit ist auch die Gefahr reduziert, dass es zu einer unbeabsichtigten Unterbrechung der elektrischen Leitung kommt.

In einer bevorzugten Ausführungsform des erfindungsgemäßen Verfahrens besteht die Assistenzelektrode aus Graphit einem Metall oder einer Legierung. Diese Substanzen sind besonders gut für das Sputtern geeignet und weisen außerdem eine hohe elektrische Leitfähigkeit auf.

Als gasförmiges Dielektrikum können u.a. Luft, Stickstoff oder Argon verwendet werden, wobei auch Gemische dieser Gase möglich sind. Luft und Stickstoff sind insofern vorteilhat, dass sie nahezu überall verfügbar und kostengünstig oder kostenlos sind. Argon wiederum ist besonders geeignet, wenn ein oxidationsempfindliches Material bearbeitet werden soll.

Um eine hohe Ausbeute beim Sputtern zu erzielen, sollte das gasförmige Dielektrikum möglichst einen Druck haben, der geringer als der umgebende Normaldruck ist. Weiterhin kann es vorteilhaft sein, das gasförmige Dielektrikum während der Durchführung des Verfahrens kontinuierlich oder zu bestimmten Zeitpunkten ganz oder teilweise auszutauschen. Dadurch wird insbesondere dafür gesorgt, dass die bei der Funkenentladung verdampften Substanzen aus dem gasförmigen Dielektrikum entfernt werden, da sie ansonsten die Leitfähigkeit des Dielektrikums negativ beeinflussen können.

Die Assistenzelektrode sollte möglichst eine Dicke von 2 bis 4 µm haben, da dann einerseits eine sichere elektrische Kontaktierung gewährleistet ist und andererseits eine entsprechende Beschichtung schnell durch Sputtern aufgebracht werden kann.

Versuche haben gezeigt, dass das erfindungsgemäße Verfahren besonders gut für die Bearbeitung von Keramikmaterialien geeignet ist. Es erfolgt ein zügiger Abtrag des keramischen Materials, der mit anderen im Stand der Technik bekannten Verfahren so nicht möglich ist. Dies trifft im besonderen Maße auf Keramik aus voll- oder teilstabilisiertem Zirkoniumoxid zu, die häufig als Beschichtung für Bauteile verwendet werden. Sie erfüllen in diesen Fällen die Funktion einer Wärmedämmschicht und können mit Hilfe des erfindungsgemäßen Verfahrens schnell und präzise funkenerosiv bearbeitet werden. Bei beschichteten Bauteilen einer Turbine ist es möglich, in Lauf- und Leitschaufeln Kühlluftbohrungen einzubringen.

Das erfindungsgemäße Verfahren wird im Folgenden anhand von zwei Zeichnungen näher erläutert. Es zeigen:

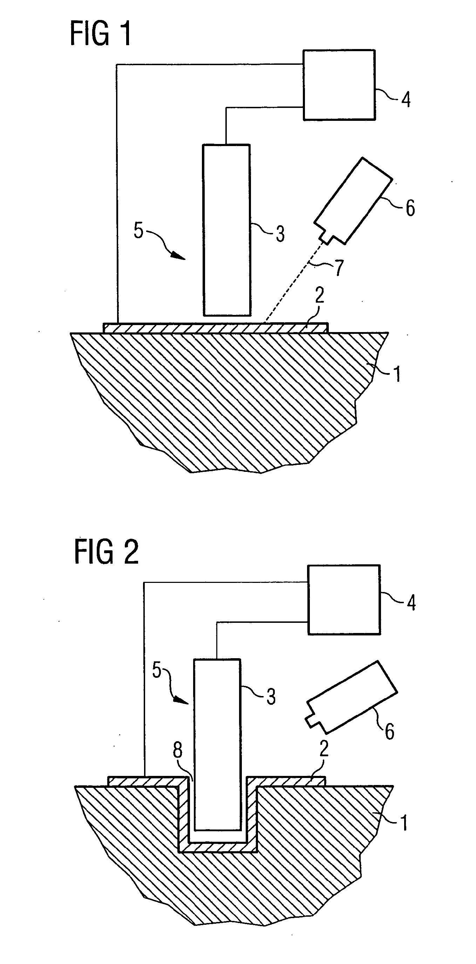

Figur 1 eine Anordnung für die Durchführung des erfindungsgemäßen Verfahrens zur funkenerosiven Bearbeitung eines elektrisch nichtleitenden Materials in schematischer Darstellung vor einem ersten Abtragungsprozess;
Figur 2 die Anordnung aus Figur 1 nach zumindest einem Abtragungsprozess,
Figur 3 eine Gasturbine,
Figur 4 eine Turbinenschaufel,
Figur 5 eine Brennkammer.

Das elektrisch nichtleitende Material ist hier in Form eines Bauteils 1 ausgebildet, das aus einer Keramik besteht, die Zirkoniumoxid enthalten kann. Bei dem Bauteil 1 kann es sich um ein Teil einer Turbine oder einer Brennkammer, z.B. eine Lauf- oder Leitschaufel handeln. Es ist auch möglich, dass das elektrisch nichtleitende Material die Beschichtung beispielsweise einer Turbinenschaufel bildet, wobei sie als eine Wärmedämmschicht ausgeführt sein kann. Auf dem Bauteil 1 ist zumindest bereichsweise eine Assistenzelektrode 2 aus Graphit aufgebracht, welche aber auch aus Metallen oder Metalllegierungen bestehen kann. Die Assistenzelektrode 2 und eine Arbeitselektrode 3 sind elektrisch leitend mit einem Generator 4 verbunden, der an die Elektroden 2, 3 eine geeignete Spannung anlegt. Ein gasförmiges Dielektrikum 5, das aus Stickstoff besteht, umgibt zumindest die beiden Elektroden 2, 3. Das Dielektrikum 5 kann aber auch aus Luft, Argon oder Gemischen von Luft, Argon und Stickstoff bestehen.

Neben der Arbeitselektrode 3 ist eine Beschichtungseinrichtung 6 angeordnet, bei der es sich um eine an sich bekannte Sputtereinrichtung handelt. Von der Beschichtungseinrichtung 6 geht ein Partikelstrahl 7 aus Kohlstoffatomen aus, der in Richtung des elektrisch nichtleitenden Materials 1 abgegeben wird.

Um das Bauteil 1 mit Hilfe des erfindungsgemäßen Verfahrens funkenerosiv zu bearbeiten, wird in einem ersten Schritt die Assistenzelektrode 2 auf die Oberfläche des Bauteils 1 aufgebracht. Dazu wird in der Beschichtungseinrichtung 6 der Partikelstrahl 7 erzeugt, der auf der Oberfläche des elektrisch nichtleitenden Materials 1 auftrifft und dort die Assistenzelektrode 2 ausbildet. Da die Assistenzelektrode 2 als Schicht ausgebildet werden soll, kann die Beschichtungseinrichtung 6 entweder über die zu beschichtende Oberfläche des elektrisch nichtleitenden Materials 1 geführt werden, oder ortsfest um eine Achse derart gedreht werden, dass der Partikelstrahl 7 den zu beschichtenden Bereichs des elektrisch nichtleitenden Materials überstreicht.

In einem zweiten Schritt wird die Assistenzelektrode 2 gemeinsam mit der Arbeitselektrode 3 elektrisch leitend mit dem Generator 4 verbunden. Nachdem die Arbeitselektrode 3 in unmittelbarer Nähe zu der Assistenzelektrode 2 gebracht worden ist und eine geeignete Spannung an die beiden Elektroden 2, 3 angelegt wurde, kommt es zwischen den Elektroden 2, 3 zu einer elektrischen Kontaktierung in Form von Funkenschlag, wobei Teile der Assistenzelektrode 2 und des keramischen Materials des Bauteils 1 in einem Bearbeitungsbereich 8 verdampft und damit abgetragen werden.

Nach dieser Funkenentladung wird das gasförmige Dielektrikum 5 ganz oder teilweise ausgetauscht. Anschließend wird wiederum mit Hilfe der Beschichtungseinrichtung 6 auf dem jetzt freiliegenden Teil des elektrisch nichtleitenden Materials 1 in dem Bearbeitungsbereich 8 Kohlenstoff derart aufgebracht, dass auch hier eine an die Konturen des Bearbeitungsbereichs 8 angepasste leitfähige Schicht als Teil der Assistenzelektrode 2 ausgebildet wird. Dabei wird darauf geachtet, dass der neu aufgebrachte Teil der Assistenzelektrode 2 in elektrisch leitendem Kontakt mit dem noch vorhandenen Teil der Assistenzelektrode 2 steht.

Um nun wiederum den Abtragungsprozess durchzuführen, wird die Arbeitselektrode 3 in Richtung des elektrisch nichtleitenden Materials 1 nach unten bewegt, so dass sie sich wiederum in einem optimalen Abstand zu der Assistenzelektrode 2 befindet. Durch das Anlegen einer geeigneten Spannung kommt es dann zur funkenerosiven Entladung.

Die Verfahrensschritte des Beschichtungsprozesses und des Abtragungsprozesses können alternierend solange wiederholt werden, wie die funkenerosive Bearbeitung fortgesetzt werden soll.

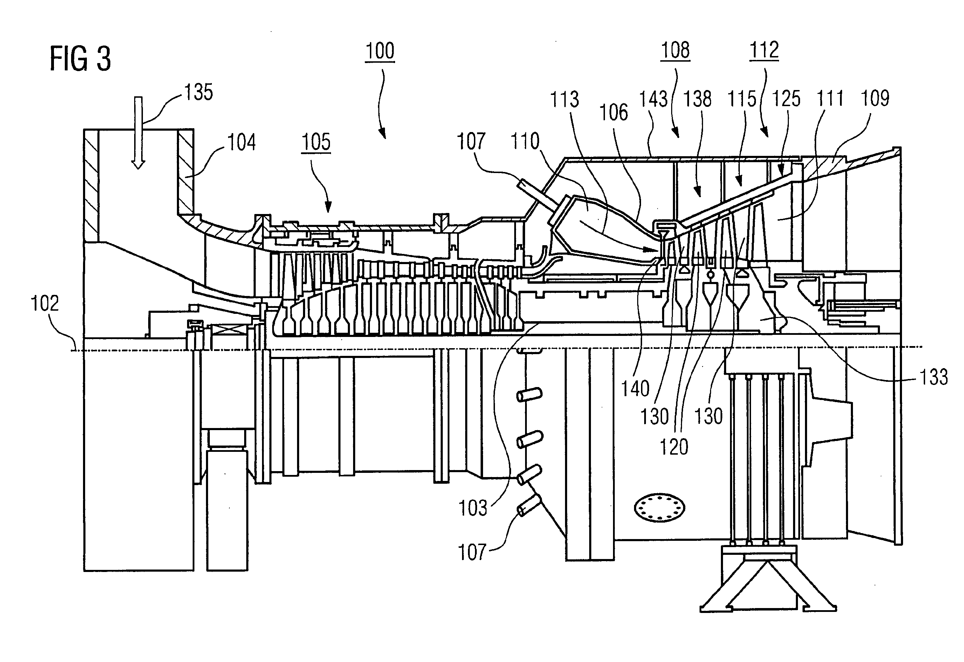

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für'die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

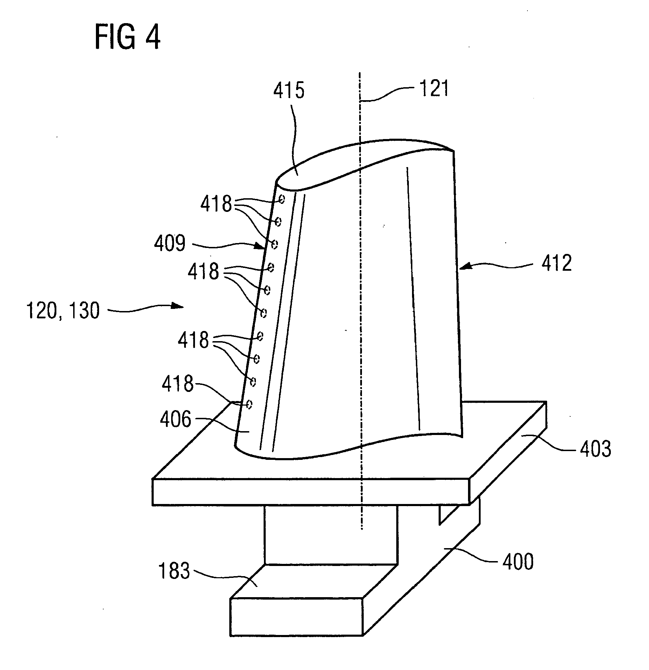

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.
Die Filmkühllöcher 418 können vorzugsweise mit dem erfindungsgemäßen Verfahren hergestellt werden.

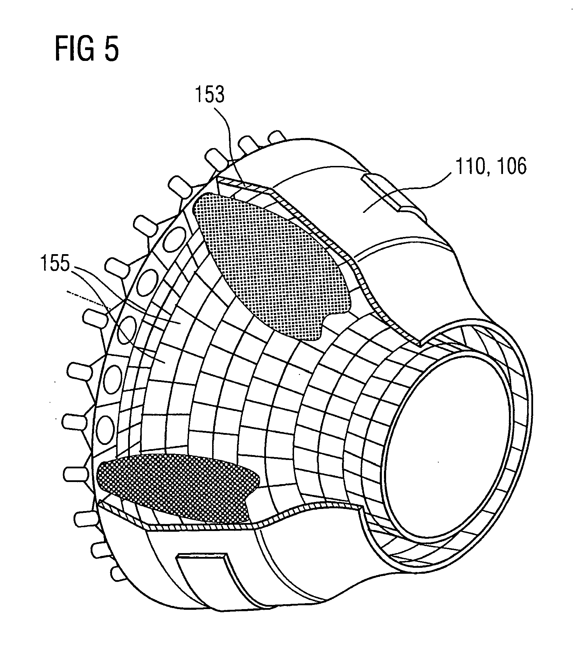

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur funkenerosiven Bearbeitung eines elektrisch nichtleitenden Materials (1), bei dem eine Assistenzelektrode (2) auf dem elektrisch nichtleitenden Material (1) durch einen Beschichtungsprozess aufgebracht wird und an die Assistenzelektrode (2) und eine gegenüberliegend angeordnete Arbeitselektrode (3) eine geeignete Spannung angelegt wird, wodurch es zu einem Abtragungsprozess in Form einer elektrischen Entladung durch Funkenschlag kommt, bei dem ein Teil der Assistenzelektrode (2) und ein Teil des elektrisch nichtleitenden Materials (1) verdampft und entfernt wird,
**dadurch gekennzeichnet, dass**
das Verfahren in einem gasförmigen Dielektrikum (5) durchgeführt wird, die Assistenzelektrode (2) durch Sputtern aufgebracht wird und der Beschichtungsprozess und der Abtragungsprozess alternierend wiederholt werden.

2. Verfahren nach Anspruch 1,
**dadurch gekennzeichnet, dass**
die Assistenzelektrode (2) aus Graphit, einem Metall oder einer Legierung besteht.

3. Verfahren nach einem der Ansprüche 1 oder 2,
**dadurch gekennzeichnet, dass**
das gasförmige Dielektrikum (5) aus Luft, Stickstoff oder Argon oder aus Mischungen davon besteht.

4. Verfahren nach einem der Ansprüche 1 bis 3,
**dadurch gekennzeichnet, dass**
das gasförmige Dielektrikum (5) einen Druck hat, der geringer als der umgebende Normaldruck ist.

5. Verfahren nach einem der Ansprüche 1 bis 4,
**dadurch gekennzeichnet, dass**
das Dielektrikum (5) während des Verfahrens kontinuierlich oder zu bestimmten Zeiten ganz oder teilweise ausgetauscht wird.

6. Verfahren nach einem der Ansprüche 1 bis 5,
**dadurch gekennzeichnet, dass**
die Assistenzelektrode (2) eine Dicke von 2-4 µm hat.

7. Verfahren nach einem der Ansprüche 1 bis 6,
**dadurch gekennzeichnet, dass**
das elektrisch nichtleitende Material (1) eine Keramik ist.

8. Verfahren nach Anspruch 7,
**dadurch gekennzeichnet, dass**
die Keramik voll- oder teilstabilisiertes Zirkoniumoxid enthält oder daraus besteht.

9. Verfahren nach einem der Ansprüche 1 bis 8,
**dadurch gekennzeichnet, dass**
das elektrisch nichtleitende Material (1) eine Beschichtung auf einem Bauteil ist.

10. Verfahren nach Anspruch 9,
**dadurch gekennzeichnet, dass**
das Bauteil Teil einer Turbine ist.

11. Verfahren nach Anspruch 10,
**dadurch gekennzeichnet, dass**
das Bauteil eine Lauf- oder Leitschaufel ist.
